# EUROPÄISCHE PATENTSCHRIFT

(11) **EP 3 891 385 B1**
(45) Veröffentlichungstag und Bekanntmachung des Hinweises auf die Patenterteilung: **17.09.2025**
(21) Anmeldenummer: 19817259.5
(22) Anmeldetag: 06.12.2019
(51) Int. Cl.: F03D 7/02, F03D 80/70, F03D 1/06

(54) **WINDENERGIEANLAGE MIT TRAGSTRUKTUR**
WIND POWER PLANT WITH SUPPORTING STRUCTURE
ÉOLIENNE COMPRENANT UNE STRUCTURE PORTEUSE

(30) Priorität: 07.12.2018 DE 102018131321
(43) Veröffentlichungstag der Anmeldung: 13.10.2021
(73) Patentinhaber: Wobben Properties GmbH, 26607 Aurich (DE)
(72) Erfinder: SARTORIUS, Florian, 26789 Leer (DE)
(74) Vertreter: Eisenführ Speiser
(86) Internationale Anmeldenummer: PCT/EP2019/083962
(87) Internationale Veröffentlichungsnummer: WO 2020/115272

(56) Entgegenhaltungen:
- EP-A1- 3 242 013
- WO-A2-2017/084755
- DE-A1- 102007 008 166
- DE-A1- 102007 008 167
- DE-A1- 102007 009 575
- DE-A1- 102011 113 372

## Beschreibung

Die Erfindung betrifft eine Windenergieanlage mit einem ersten Bauteil, einem zweiten Bauteil, einer Lagerung, mittels derer das erste Bauteil drehbar an dem zweiten Bauteil gelagert ist, einer ersten Flanschverbindung zwischen dem ersten Bauteil und der Lagerung, einer zweiten Flanschverbindung zwischen dem zweiten Bauteil und der Lagerung, und mindestens einem Antrieb, zum Verdrehen des ersten Bauteils relativ zu dem zweiten Bauteil, welcher von einer Tragstruktur gehalten wird.

In der prioritätsbegründenden deutschen Anmeldung 10 2018 131 321.7 hat das Deutsche Patent- und Markenamt folgenden Stand der Technik recherchiert: DE 10 2007 008 166 A1, DE 10 2007 008 167 A1, DE 10 2007 009 575 A1 und WO 2017/ 005 264 A1.

Windenergieanlagen sind allgemein bekannt. Sie werden genutzt um elektrische Energie zu erzeugen. Sie weisen üblicherweise einen Turm auf, auf welchem eine Gondel drehbar gelagert ist, wobei die Gondel mit einem Rotor der Windenergieanlage wirkverbunden ist. Die dominierende Bauform von Windenergieanlagen ist die dreiblättrige Horizontalachsen-Windenergieanlage, bei der sich der Rotor im Betrieb auf der Luvseite befindet und deren Gondel der Windrichtung aktiv, insbesondere durch einen Azimutantrieb, nachgeführt wird. Ferner ist es üblich, dass die Rotorblätter um ihre Längsachse mittels eines Pitchantriebs gedreht werden können.

Auch allgemein bekannt ist die Verwendung von Zahnradanordnungen für Drehverbindungen bei Windenergieanlagen an den Stellen, an denen Bauteile rotatorisch relativ zueinander bewegt werden und insbesondere, wo eine Übersetzung von einem ersten rotierenden Bauteil zu einem zweiten rotierenden Bauteil realisiert werden soll. Ein Pitchantrieb oder Azimutantrieb weist dabei einen Antrieb auf, der üblicherweise über ein Getriebe eine Antriebswelle antreibt. Der Antrieb ist dabei schnell drehend mit kleinem Drehmoment und die Antriebswelle langsam drehend mit großem Drehmoment. Das große Drehmoment wird dann von der Antriebswelle über ihr Ritzel, also ein kleines Zahnrad, an ein großes Zahnrad übertragen im Bereich einer Rotorblattwurzel, um das Rotorblatt zu verstellen bzw. im Bereich eines Übergangs zwischen Turm und Gondel, um die Gondel zu verstellen. Beispielsweise weist die Rotorblattwurzel entlang Ihres äußeren Umfangs eine Außenverzahnung auf, die dann das Zahnrad, in das das Ritzel des Getriebes eingreift, bildet. Zur Blattverstellung bzw. zur Azimutverstellung wird dabei ein hohes Antriebsmoment übertragen.

Die aus dem Stand der Technik bekannten Tragstrukturen für den Pitchantrieb und den Azimutantrieb sind zumeist massive integrale Gusskonstruktionen, da zur Blattverstellung bzw. zur Azimutverstellung ein hohes Antriebsmoment übertragen wird, das in hohen Belastungen der beteiligten mechanischen Komponenten resultiert. Beispielsweise sind die Azimutantriebe zumeist an Kästen angeordnet, welche in der Tragstruktur, welche die Lagerung und die Gondel mit dem Turm verbindet, oder den Maschinenträger eingelassen sind. Die aus dem Stand der Technik bekannten Aufnahmen für die Pitchantriebe werden zumeist an die Rotornabe oder eine zur Aufnahme der Lagerung und des Zahnrads vorgesehene Adapterplatte angegossen. Diese Gusskonstruktionen führen aufgrund ihrer Komplexität und des Bauteilgewichts zu erheblichen Fertigungs-, Transport- und Montagekosten.

Insbesondere bei getriebelosen Windenergieanlagen mit langsam drehenden vielpoligen Synchrongeneratoren sind die Generatoren und damit die Gondeln der Windenergieanlagen sehr groß. Es ist daher insbesondere bei getriebelosen Windenergieanlagen von Vorteil, eine kompakte Bauform vorzusehen, um die hohen Transport- und Montagekosten aufgrund der Dimensionierung der Bauteile zu reduzieren.

EP 3 242 013 A1 offenbart eine Windenergieanlage nach dem Oberbegriff von Anspruch 1. DE 10 2007 009 575 A1, DE 10 2011 113372 A1, DE 10 2007 008 167 A1 und DE 10 2007 008 166 A1 offenbaren Windenergieanlagen mit einem ersten und zweiten Bauteil und einer Lagerung, mittels derer das erste Bauteil drehbar an dem zweiten Bauteil gelagert ist. Weiterhin wird mindestens einem Antrieb zum Verdrehen des ersten Bauteils relativ zu dem zweiten Bauteil von einer plattenförmigen Tragstruktur gehalten. WO 2017/084755 A2 zeigt ferner eine solche Windenergieanlage, bei welcher die Tragstruktur zwei voneinander beabstandete Lagerträger umfasst, die sich parallel zueinander erstrecken.

In der Windenergieanlagenbranche ist ein stetig zunehmender Kostendruck festzustellen. Aufgrund dessen werden kosteneffizientere Konstruktionen und kompaktere Bauformen angestrebt. Es ist daher Aufgabe der Erfindung, eine Tragstruktur anzugeben, welche die vorstehend beschriebenen Nachteile möglichst weitgehend überwindet. Insbesondere sollte eine Lösung gefunden werden, welche eine Reduktion des Gewichts und der damit einhergehenden Transport- und Montagekosten bzw. der Fertigungskosten vorsieht.

Die Erfindung löst die zugrundeliegende Aufgabe indem sie einer Windenergieanlage mit den Merkmalen von Anspruch 1 vorschlägt. Insbesondere schlägt die Erfindung vor, dass bei Windenergieanlagen der eingangs bezeichneten Art, die Tragstruktur als Platte ausgebildet und an einer der Flanschverbindungen angeordnet ist.

Als eine Platte werden hier Bauteile verstanden, deren Dicke im Verhältnis zu ihrer Grundfläche sehr klein ist, vorzugsweise unter 200 mm, besonders bevorzugt bis zu 100 mm liegt. Die Platte ist vorzugsweise eben ausgebildet.

Die Ausbildung der Tragstruktur als Platte reduziert die Fertigungstiefe und somit die Fertigungskosten der Tragstruktur. Die Befestigung der Tragstruktur an einer der Flanschverbindungen bietet eine kompakte Bauweise bei gleichzeitig einfacher Befestigung der Tragstruktur und ermöglicht somit eine Reduzierung des Bauraums.

Die Tragstruktur ist vorzugsweise an dem Maschinenträger in der Gondel oder an der Rotornabe, benachbart zu dem Generator angeordnet. Die damit einhergehende kompakte Bauweise ermöglicht den Verzicht auf lange Kabelführungen und insbesondere aufwendige Kontaktierungen.

Gemäß einer vorteilhaften Weiterbildung der Erfindung ist einem der Bauteile ein Zahnrad zugeordnet, und der Antrieb weist mindestens ein Antriebsritzel auf, welches mit dem Zahnrad wirkverbunden ist.

Weiter bevorzugt weist die Tragstruktur eine Vielzahl von Aussparungen in einem vorbestimmten Muster auf, und das Bauteil und die Lagerung der mit der Tragstruktur korrespondierenden Flanschverbindung weisen ferner korrespondierende Aussparungen in demselben Muster auf, wobei die Aussparungen zur Durchführung, von Verbindungsmittel, insbesondere Bolzen, angepasst sind, mittels derer die Tragstruktur mit der Flanschverbindung verbindbar ist. Somit wird eine funktionale und gut handhabbare Verbindung zwischen der Tragstruktur, der Lagerung und einer der Flanschverbindungen vorgeschlagen. Diese Verbindung erfordert ferner keinen zusätzlichen Bauraum und lässt sich kosteneffizient umsetzen. Vor allem können alle Bauteile in einem Montagevorgang mit demselben Verbindungsmittel montiert werden, was die Montageeffizienz erhöht.

Auch kann beispielsweise vorhandener Bauraum an dem äußeren Umfang des Turms oder des Rotorblattes genutzt werden, um dort das Zahnrad anzuordnen und die Antriebe mit diesem in Eingriff zu bringen.

Die Anordnung der Tragstruktur für den Antrieb an der zweiten Flanschverbindung ist insbesondere bei kleinen Zahnraddurchmessern vorteilhaft. Bei kleinen Zahnraddurchmessern sind die Antriebe im Vergleich mit dem Zahnrad schwer, sodass durch die Anordnung des Zahnrads an dem drehbar gelagerten Bauteil Gewicht eingespart wird und die notwendige Antriebsleistung somit niedriger gewählt werden kann.

Gemäß einer vorteilhaften Weiterbildung der Erfindung weist die Lagerung einen Lagerring auf, und die Vielzahl der Aussparungen der Lagerung sind an dem Lagerring ausgebildet. Die korrespondierenden Aussparungen in dem Lagerring ermöglichen eine kompakte Bauweise durch die Ausnutzung der bereits vorhandenen Aussparungen zur Anbindung der Lagerung an ein erstes oder zweites Bauteil mittels einer ersten oder zweiten Flanschverbindung.

Besonders bevorzugt weist die Tragstruktur eine erste Anzahl Montage-Aufnahmen für die Antriebe auf, und eine zweite Anzahl Antriebe ist in den Aufnahmen montiert, wobei die erste Anzahl größer als die zweite Anzahl ist. Somit kann die Positionierung der Antriebe an der Tragstruktur über die Zeit variiert werden und damit vorzeitigem Verschleiß der mit dem Antrieb wirkverbundenen mechanischen Komponenten und insbesondere der Zahnräder entgegengewirkt werden. Der Wartungsaufwand wird durch die Möglichkeit einer Variation der Positionierung der Antriebe reduziert und die Lebensdauer der Anlage erhöht.

Gemäß einer bevorzugten Ausführungsform ist die Tragstruktur angrenzend an das Zahnrad, vorzugsweise zwischen dem Zahnrad und der dem Zahnrad zugeordneten Flanschverbindung, angeordnet. Eine solche erfindungsgemäße Anordnung der Tragstruktur erhöht die Klemmlänge der Verbindungsmittel zwischen Zahnrad und Flanschverbindung und somit die übertragbare Kraft.

Gemäß einer vorteilhaften Ausführungsform der Erfindung ist die Tragstruktur aus glasfaserverstärktem Kunststoff und/oder kohlenstofffaserverstärktem Kunststoff ausgebildet, und die Aufnahmen und/oder Aussparungen sind vorzugsweise metallisch verstärkt ausgebildet. Somit wird das Gewicht der Tragstruktur und damit der Gondel der Windenergieanlage weiter reduziert. Die Ausbildung der Platte aus einem faserverstärkten Kunststoff ermöglicht eine lastpfadgerechte Auslegung, und die metallische Verstärkung der Aufnahmen vermeidet das sogenannte Lochleibungsversagen infolge von in Umfangsrichtung wirkenden Kräften. Durch die lokale Verstärkung und lastpfadoptimierte Auslegung der Tragstruktur kann das Gewicht und somit der Transport- und Montageaufwand erheblich reduziert werden.

Gemäß einer weiteren vorteilhaften Ausführungsform der Erfindung ist die Tragstruktur aus einem metallischen Werkstoff ausgebildet, wobei der metallische Werkstoff an den Aufnahmen und/oder Aussparungen vorzugsweise gehärtet, besonders bevorzugt randschichtgehärtet, ausgebildet ist. Auf die Aufnahmen für die Antriebe, welche an der Tragstruktur ausgebildet sind, wirken zum einen die Gewichtskräfte der Antriebe in vertikaler Richtung, welche zu einer Biegebelastung führen. Zum anderen treten in Umfangsrichtung wirkende Belastungen infolge der Trägheit des zu drehenden Bauteils auf. Da die in Umfangsrichtung wirkenden Belastungen infolge der Trägheit des zu drehenden Bauteils zumeist deutlich größer sind, erhöht eine Festigkeitssteigerung die Lebensdauer der Tragstruktur und vermeidet eine Überdimensionierung in mechanisch nur gering beanspruchten Bereichen.

Bevorzugt weist die Tragstruktur eine Dicke von 100 mm oder weniger, insbesondere von 10 mm bis 100 mm auf. Da die Tragstruktur insbesondere Kräfte in Umfangsrichtung erfährt, ist eine derartige Auslegung der Dicke der Platte für den jeweiligen Belastungszustand funktional und vermeidet eine Überdimensionierung und die unerwünschte Erhöhung des Gewichts.

Erfindungsgemäß ist die Tragstruktur aus mehreren Segmentteilen ausgebildet, welche sich jeweils teilumfänglich koaxial erstrecken. Somit wird insbesondere bei großen Windenergieanlagen der Transportaufwand erheblich reduziert, und es können somit die Kosten gesenkt werden. Die Segmentteile bilden folglich eine zylindrische Aussparung aus, welche koaxial zu dem Lagerring und/oder dem Zahnrad angeordnet ist. Hinsichtlich der erzielten Vorteile einer zylindrischen Aussparung, sei auf die obige Ausführung verwiesen.

Erfindungsgemäß weist die Tragstruktur mindestens ein erstes Segmentteil auf, welches jeweils die mindestens eine Aufnahme für die Antriebe aufweist und die Tragstruktur weist ferner mindestens ein zweites Segmentteil auf, wobei das erste Segmentteil vorzugsweise aus einem hochfesten Werkstoff ausgebildet ist. Somit kann durch die erfindungsgemäße Funktionsteilung der Segmentteile der Tragstruktur, insbesondere durch die Verteilung der Antriebe auf die ersten Segmentteile, und eine lastgerechte Materialauswahl, eine Gewichts- und Kostenreduktion der Tragstruktur erzielt werden.

Gemäß einer besonders bevorzugten Ausführungsform ist das erste Bauteil ein in der Gondel angeordneter Maschinenträger einer Windenergieanlage, das zweite Bauteil ein Turm einer Windenergieanlage, die Lagerung eine Azimutlagerung und der Antrieb ein Azimutantrieb. Somit kann auf die aus dem Stand der Technik bekannten Azimutkästen, welche an den Maschinenträger angegossen werden, verzichtet werden. Die Fertigung des Maschinenträgers wird durch die reduzierte Komplexität des Gussteils erleichtert und somit werden die Fertigungskosten reduziert. Ferner können die Transport- und Montagekosten durch das reduzierte Gewicht des Maschinenträgers weiter gesenkt werden.

Besonders vorteilhaft ist die Anordnung der Tragstruktur zwischen der Lagerung und dem ersten bzw. dem zweiten Bauteil, da bedingt durch die geringe Bauteilhöhe der ebenen Platte der benötigte Bauraum erheblich reduziert wird und die Gondel kompakter gestaltet werden kann.

Gemäß einer weiteren vorteilhaften Ausführungsform der Erfindung ist das erste Bauteil ein Rotorblatt, das zweite Bauteil eine an der Gondel angeordnete Rotornabe, die Lagerung eine Pitchlagerung und der Antrieb ein Pitchantrieb. Die erfindungsgemäße Tragstruktur für einen Antrieb, hier einen Pitchantrieb, macht sich somit auch hier die vorstehend beschriebenen Vorteile zunutze. Die Reduzierung des Gewichts der Tragstruktur für die Pitchantriebe wirkt sich ferner auf das Gewicht der mit dem Rotor gekoppelten Rotationsbaugruppe aus, und die damit einhergehende Reduzierung des Gewichts erhöht die Ausbeute elektrischer Energie und reduziert die Belastungen, welche auf den Maschinenträger und den Achszapfen wirken.

Die Erfindung wird nachfolgend anhand von Ausführungsbeispielen unter Bezugnahme auf die beigefügten Figuren näher erläutert. Es zeigen:
- Figur 1: eine Windenergieanlage schematisch in einer perspektivischen Ansicht,
- Figur 2: eine Ausführungsform der erfindungsgemäßen Tragstruktur zur Aufnahme eines Azimutantriebs in einer perspektivischen Ansicht,
- Figur 3: eine Ausführungsform der erfindungsgemäßen Tragstruktur zur Aufnahme eines Azimutantriebs in einer Explosionsdarstellung,
- Figur 4: eine Ausführungsform der erfindungsgemäßen Tragstruktur zur Aufnahme eines Pitchantriebs in einer Explosionsansicht, und
- Figur 5: eine Detailansicht der erfindungsgemäßen Tragstruktur.

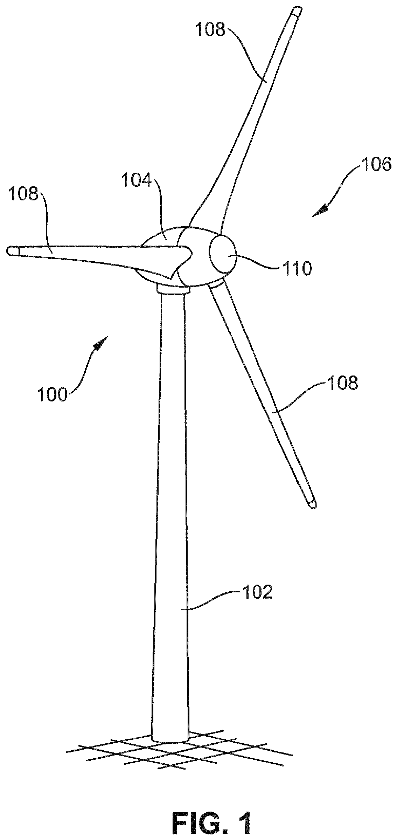

Figur 1 zeigt eine Windenergieanlage 100 mit einem Turm 102 und einer Gondel 104. An der Gondel 104 ist ein Rotor 106 mit drei Rotorblättern 108 und einem Spinner angeordnet. Der Rotor 106 wird im Betrieb durch den Wind in eine Drehbewegung versetzt und treibt dadurch einen Generator (nicht gezeigt) in der Gondel 104 an.

Die Rotorblätter 108 sind mit einer Rotornabe 112 wirkverbunden. Die Rotornabe 112 ist drehbar an der Gondel 104 gelagert. Die Gondel 104 ist mittels eines Azimutantriebs 122 drehbar auf dem Turm 102 gelagert. Die Rotorblätter 108 sind an ihrer Rotorblattwurzel mittels eines Pitchantriebs 122' drehbar an der Rotornabe 110 gelagert.

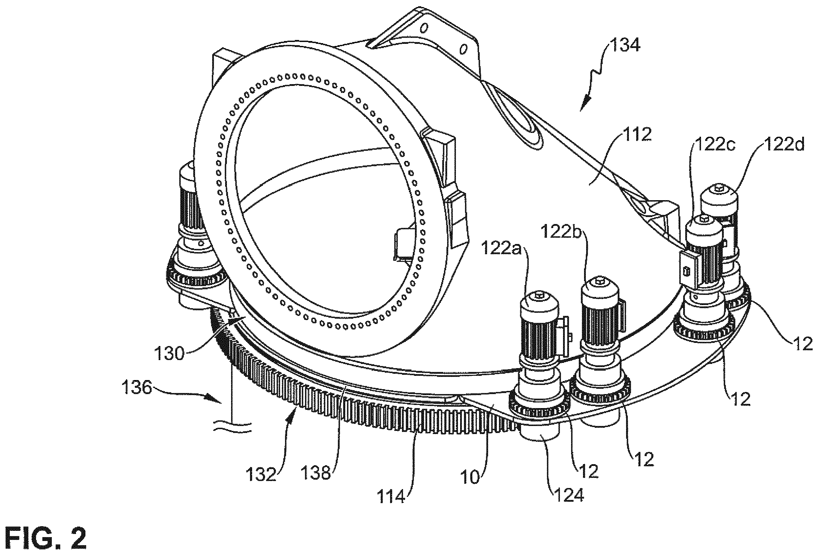

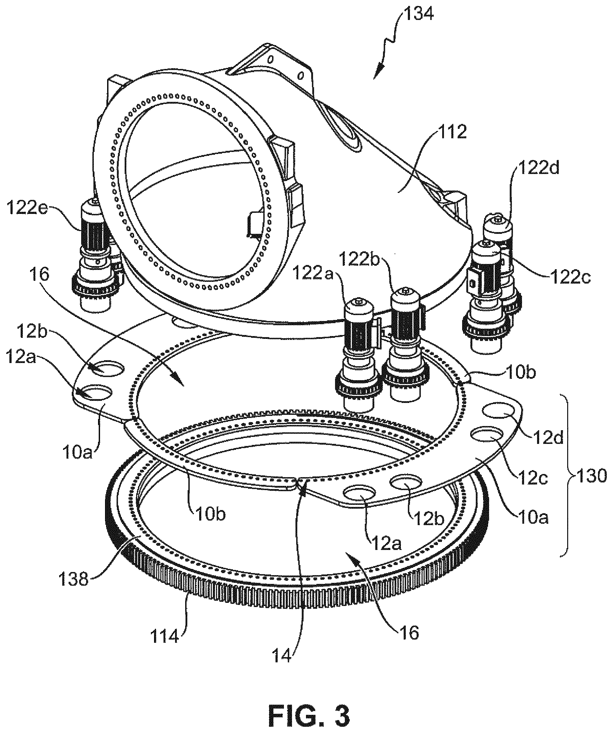

Die Figuren 2 und 3 zeigen eine Ausführungsform der erfindungsgemäßen Windenergieanlage 100 mit einem ersten Bauteil 134, hier die Gondel 104, einem zweiten Bauteil 136, hier der Turm 102 (Figur 1) und einer Azimutlagerung 138. Mittels der Azimutlagerung 138 ist das erste Bauteil 134 drehbar an dem zweiten Bauteil 136 gelagert und mittels eines Azimutantriebs 122 antreibbbar ist.

Zwischen der Gondel 104, insbesondere dem in der Gondel 104 angeordneten Maschinenträger 112 und der Lagerung 138 ist eine erste Flanschverbindung 130 ausgebildet. Eine zweite Flanschverbindung 132 ist zwischen dem Turm 102 und der Lagerung 138 ausgebildet. Eine als Platte ausgebildete Tragstruktur 10 ist an der ersten Flanschverbindungen 130 angeordnet. Die Antriebe 122 sind an einer Tragstruktur 10 montiert.

Die Lagerung 138 weist einem Lagerring 138 (Figur 3) auf. An dem Lagerring 138 ist ein Zahnrad 114 drehbar gelagert. Das Zahnrad 114 ist mechanisch mit dem Turm 102 der Windenergieanlage 100 verbunden.

Die Azimutantriebe 122 sind an der Tragstruktur 10 derart befestigt, dass ein Antriebsritzel 124, welches turmseitig an dem jeweiligen Azimutantrieb 122 ausgebildet ist, mit dem Zahnrad 114 wirkverbunden ist. Das Antriebsritzel 124 wird mittels der Azimutantriebe 122 angetrieben.

Wie die Explosionsdarstellung gemäß Figur 3 zeigt, ist die Tragstruktur 10 segmentiert ausgebildet. Die Segmentteile 10 a, b weisen Aufnahmen 12 für die Azimutantriebe 122 auf. Im gezeigten Ausführungsbeispiel ist für jeden Antriebsmotor eine Ausnehmung 12 vorgesehen. In einer nicht dargestellten Alternative ist vorgesehen, mehr Aufnahmen 12 als Motoren 122 in der Tragstruktur 10 vorzusehen. Dies würde ein Umsetzen der Motoren 122 nach Erreichen einer vorbestimmten Nutzungsdauer ermöglichen und eine längere Nutzungsdauer des Lagerrings 138 ermöglichen.

Der Lagerring 138 weist entlang seines Umfangs eine Vielzahl von korrespondierenden Aussparungen 118 auf, durch welche Verbindungsmittel durchführbar sind, um den Lagerring 138 mit dem Maschinenträger 112 zu verbinden. Die an der ersten Flanschverbindung 130 zwischen Lagerring 138 und Maschinenträger 112 angeordnete Tragstruktur 10 weist eine Vielzahl korrespondierender Aussparung 14 auf, durch welche ebenfalls Verbindungsmittel durchführbar sind, um den Lagerring 138, die Tragstruktur 10 und den Maschinenträger 112 miteinander zu verbinden. Das Muster der Aussparungen 118 entspricht dem Muster der korrespondierenden Aussparungen 14 der Tragstruktur 10.

Die Tragstruktur 10 weist eine zylindrische Ausnehmung 16 auf, welche koaxial zu dem Lagerring 138 und dem Zahnrad 114 verläuft.

Die Antriebe 122 a, b sowie 122 c, d sind benachbart zueinander an einem ersten Segmentteil 10 a der Tragstruktur 10 angeordnet und an den Aufnahmen 12 a, b, c, d montiert. Die Azimutantriebe 122 e, f sowie 122 g, h sind gegenüberliegend an einem weiteren ersten Segmentteil 10 a der Tragstruktur 10 beabstandet zueinander an den Aufnahmen 12 a, b, c, d angeordnet. Die zweiten Segmentteile 10 b der Tragstruktur 10 sind gegenüberliegend angeordnet und schmaler als die ersten Segmentteile 10a ausgebildet, wobei sie keine Aufnahmen für Azimutantriebe 122 aufweisen. Die Segmentteile 10 a, b sind benachbart zueinander angeordnet und bilden eine Ausnehmung 16 aus, welche koaxial zu dem Lagerring 138 und dem Zahnrad 114 verläuft.

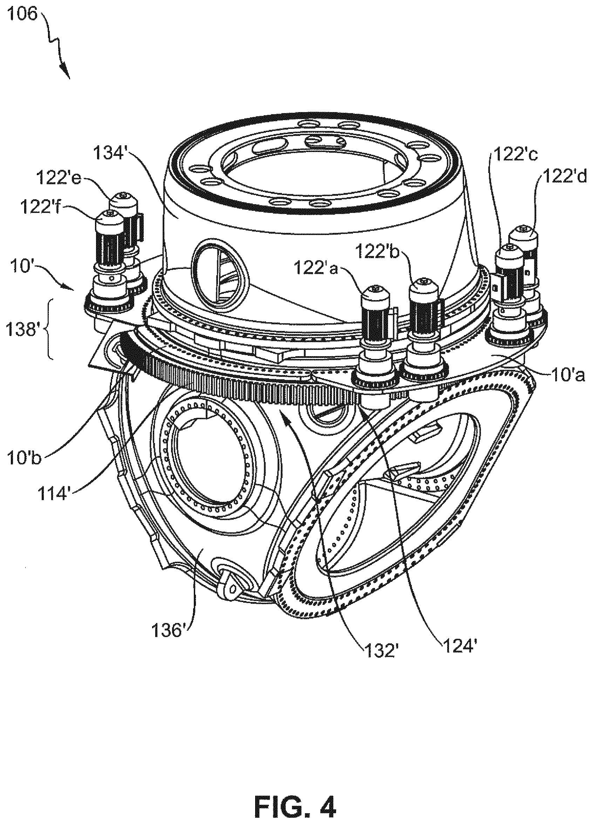

Figur 4 zeigt eine alternative Ausführungsform der erfindungsgemäßen Windenergieanlage 100 mit einem ersten Bauteil 134', hier jeweils ein Rotorblatt oder ein Zwischenstück zur Anbringung eines Rotorblatts, einem zweiten Bauteil 136', hier der Rotornabe und einer Pitchtlagerung 138'. Mittels der Pitchtlagerung 138' ist das erste Bauteil 134' drehbar an dem zweiten Bauteil 136' gelagert und mittels eines oder mehrerer Pitchantriebe 122' a-f antreibbbar ist. Die Antriebe 122'a-f sind an einer Tragstruktur 10' a,b montiert.

Die Tragstruktur 10' a,b ist vorzugsweise an dem ersten Bauteil 134' befestigt. Die Lagerung 138' weist einen Lagerring auf. An dem Lagerring ist ein Zahnrad 114' drehbar gelagert. Das Zahnrad 114' ist vorzugsweise mechanisch mit der Nabe 136' der Windenergieanlage verbunden. Die Pitchantriebe 122' sind an der Tragstruktur 10' derart befestigt, dass ein Antriebsritzel 124', welches rotorblattseitig an dem jeweiligen Pitchantrieb 122' ausgebildet ist, mit dem Zahnrad 114' wirkverbunden ist. Das Antriebsritzel 124' wird vorzugsweise mittels der Pitchantriebe 122' angetrieben. Hinsichtlich der grundsätzlichen Wirkweise wird auf die Figuren 1 bis 3 verwiesen, die dasselbe Funktionsprinzip zeigen.

Die Antriebe 122' a, b sowie 122' c, d sind benachbart zueinander an einem ersten Segmentteil 10' a der Tragstruktur 10' angeordnet und an den Aufnahmen 12' a, b, c, d montiert. Die Pitchantriebe 122' e, f sowie 122' g, h sind gegenüberliegend an einem weiteren ersten Segmentteil 10' a der Tragstruktur 10' beabstandet zueinander an den Aufnahmen 12' a, b, c, d angeordnet. Die zweiten Segmentteile 10' b der Tragstruktur 10' sind gegenüberliegend angeordnet und schmaler als die ersten Segmentteile 10' a ausgebildet, wobei sie keine Aufnahmen für Pitchantriebe 122' aufweisen. Die Segmentteile 10' a, b sind benachbart zueinander entlang eines inneren Umfangs angeordnet, welche koaxial zu dem Lagerring 138' und dem Zahnrad 114' verläuft.

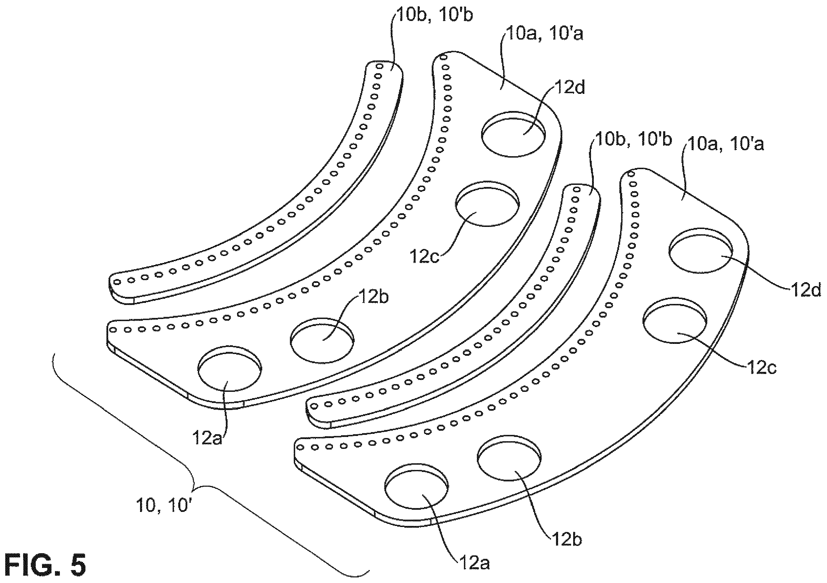

Wie Figur 5 zeigt, sind die Segmentteile 10, 10' a, b der Tragstruktur 10, 10' durch die Segmentierung in platzsparender Weise lager- und stapelbar. Vorzugsweise sind jeweils ein erstes Paar deckungsgleicher Segmentteile 10, 10' a und ein zweites Paar deckungsgleicher Segmentteile 10, 10' b vorgesehen, um die Teilevielfalt zu reduzieren.

### Bezugszeichen

- 10, 10': Tragstruktur
- 10, 10' a, b: Segmentteile
- 12, 12' a, b, c, d: Aufnahmen
- 14, 14': Aussparung
- 16, 16': Ausnehmung
- 100: Windenergieanlage
- 102: Turm
- 104: Gondel
- 106: Rotor
- 108: Rotorblätter
- 110: Rotornabe
- 112: Maschinenträger
- 114, 114': Zahnrad
- 118, 118': Aussparungen
- 122 a, b, c, d, e, f: Azimutantriebe
- 122' a, b, c, d, e, f: Pitchantriebe
- 124, 124': Antriebsritzel
- 130, 130': erste Flanschverbindung
- 132, 132': zweite Flanschverbindung
- 134, 134': erstes Bauteil
- 136, 136': zweites Bauteil
- 138, 138': Lagerung, Lagerring

## Patentansprüche

1. Windenergieanlage (100) mit
- einem ersten Bauteil (134, 134'),
- einem zweiten Bauteil (136, 136'),
- einer Lagerung (138, 138'), mittels derer das erste Bauteil (134, 134') drehbar an dem zweiten Bauteil (136, 136') gelagert ist,
- einer ersten Flanschverbindung (130, 130') zwischen dem ersten Bauteil (134, 134') und der Lagerung (138, 138'),
- einer zweiten Flanschverbindung (132, 132') zwischen dem zweiten Bauteil (136, 136') und der Lagerung (138, 138'), und
- Antriebe (122, 122'), welche von einer Tragstruktur (10, 10'), zum Verdrehen des ersten Bauteils (134, 134') relativ zu dem zweiten Bauteil (136, 136'), gehalten werden
wobei die Tragstruktur (10, 10') als Platte ausgebildet und an einer der Flanschverbindungen (130, 130', 132, 132') angeordnet ist,
wobei die Tragstruktur (10, 10') aus mehreren Segmentteilen (10, 10') ausgebildet ist, welche sich teilumfänglich koaxial erstrecken, und zur Funktionsteilung zumindest ein erstes Segmentteil (10, 10') und ferner zumindest ein zweites Segmentteil (10, 10') aufweist, wobei die Antriebe (122, 122') auf das zumindest eine erste Segmentteil (10, 10') verteilt sind, welches jeweils mindestens eine Aufnahme (12, 12') für die Antriebe (122, 122') aufweist.

2. Windenergieanlage (100) nach Anspruch 1,
wobei einem der Bauteile ein Zahnrad (114, 114') zugeordnet ist, und wobei der Antrieb (122, 122') mindestens ein Antriebsritzel aufweist, welches wirkverbunden mit dem Zahnrad (114, 114') ist.

3. Windenergieanlage (100) nach einem der Ansprüche 1 oder 2,
wobei die Tragstruktur (10, 10') eine Vielzahl von Aussparungen (14, 14') in einem vorbestimmten Muster aufweist, und die Lagerung (138, 138') der mit der Tragstruktur (10, 10') korrespondierenden Flanschverbindung (130, 130', 132, 132') ferner korrespondierende Aussparungen (118, 118') in demselben Muster aufweist, wobei die Aussparungen (14, 14') zur Durchführung, von Verbindungsmittel, insbesondere Bolzen, angepasst sind, mittels derer die Tragstruktur (10, 10') mit der Flanschverbindung (130, 130', 132, 132') verbindbar ist.

4. Windenergieanlage (100) nach einem der vorstehenden Ansprüche,
wobei die Lagerung (138, 138') einen Lagerring (138, 138') aufweist, und die Vielzahl der Aussparungen (14, 14') der Lagerung (138, 138') an dem Lagerring (138, 138') ausgebildet sind.

5. Windenergieanlage (100) nach einem der vorstehenden Ansprüche,
wobei die Tragstruktur (10, 10') eine erste Anzahl Montage-Aufnahmen (12, 12') aufweist, und eine zweite Anzahl Antriebe (122, 122') ist in den Aufnahmen montiert, wobei die erste Anzahl größer als die zweite Anzahl ist.

6. Windenergieanlage (100) nach Anspruch 2,
wobei die Tragstruktur (10, 10') angrenzend an das Zahnrad (114, 114'), vorzugsweise zwischen dem Zahnrad (114, 114') und der dem Zahnrad (114, 114') zugeordneten Flanschverbindung (130, 130', 132, 132') angeordnet ist.

7. Windenergieanlage (100) nach einem der vorstehenden Ansprüche,
wobei die Tragstruktur (10, 10') aus glasfaserverstärktem Kunststoff und/oder kohlenstofffaserverstärktem Kunststoff ausgebildet ist, und die Aufnahmen (12, 12') und/oder Aussparungen (118, 118') vorzugsweise metallisch verstärkt ausgebildet sind.

8. Windenergieanlage (100) nach einem der vorstehenden Ansprüche,
wobei die Tragstruktur (10, 10') aus einem metallischen Werkstoff ausgebildet ist, wobei die Aufnahmen (12, 12') und/oder Aussparungen (118, 118') vorzugsweise aus einem gehärteten metallischen Werkstoff ausgebildet sind.

9. Windenergieanlage (100) nach einem der vorstehenden Ansprüche,
wobei die Tragstruktur (10, 10') eine Dicke 100 mm oder weniger, insbesondere von 10 mm bis 100 mm, aufweist.

10. Windenergieanlage (100) nach einem der vorstehenden Ansprüche, wobei das erste Segmentteil (10, 10') aus einem hochfesten Werkstoff ausgebildet ist.

11. Windenergieanlage (100) nach einem der vorstehenden Ansprüche, wobei das erste Bauteil (134) ein in einer Gondel (104) angeordneter Maschinenträger (112) einer Windenergieanlage (100), das zweite Bauteil (136) ein Turm (102) einer Windenergieanlage (100), die Lagerung (138) eine Azimutlagerung und der Antrieb (122) ein Azimutantrieb ist.

12. Windenergieanlage (100) nach einem der vorstehenden Ansprüche, wobei das erste Bauteil (134') ein Rotorblatt (108), das zweite Bauteil (136') eine an der Gondel (104) angeordnete Rotornabe (110), die Lagerung (138') eine Pitchlagerung und der Antrieb (122') ein Pitchantrieb ist.

## Claims

1. A wind power installation (100) comprising
- a first structural element (134, 134'),
- a second structural element (136, 136'),
- a bearing assembly (138, 138') by means of which the first structural element (134, 134') is rotatably mounted on the second structural element (136, 136'),
- a first flange connection (130, 130') between the first structural element (134, 134') and the bearing assembly (138, 138'),
- a second flange connection (132, 132') between the second structural element (136, 136') and the bearing assembly (138, 138'), and
- drives (122, 122') that are held by a support structure (10, 10') such as to rotate the first structural element (134, 134') relative to the second structural element (136, 136'),
wherein the support structure (10, 10') is a plate and arranged at one of the flange connections (130, 130', 132, 132'),
wherein the support structure (10, 10') is realized as a plurality of segment parts (10, 10') that each extend coaxially over part of the circumference, and for functional division has at least one first segment part (10, 10') and at least one second segment part (10, 10'), wherein the drives (122, 122') are distributed to the at least one first segment part (10, 10') which in each case has at least one receiver (12, 12') for the drives (122, 122').

2. The wind power installation (100) as claimed in claim 1,
wherein there is a gearwheel (114, 114') assigned to one of the structural elements, and the drive (122, 122') has at least one driving pinion that is operatively connected to the gearwheel (114, 114').

3. The wind power installation (100) as claimed in either one of claims 1 and 2,
wherein the support structure (10, 10') has a plurality of openings (14, 14') in a predetermined pattern, and the bearing assembly (138, 138') of the flange connection (130, 130', 132, 132') corresponding to the support structure (10, 10') further has corresponding openings (118, 118') in the same pattern, wherein the openings (14, 14') are adapted for the lead-through of connection means, in particular bolts, by means of which the support structure (10, 10') can be connected to the flange connection (130, 130', 132, 132').

4. The wind power installation (100) as claimed in any one of the preceding claims, wherein the bearing assembly (138, 138') comprises a bearing ring (138, 138'), and the plurality of openings (14, 14') of the bearing assembly (138, 138') are realized on the bearing ring (138, 138').

5. The wind power installation (100) as claimed in any one of the preceding claims, wherein the support structure (10, 10') has a first number of mounting receivers (12, 12'), and a second number of drives (122, 122') is mounted in the receivers, wherein the first number is greater than the second number.

6. The wind power installation (100) as claimed in claim 2,
wherein the support structure (10, 10') is arranged adjacent to the gearwheel (114, 114'), preferably between the gearwheel (114, 114') and the flange connection (130, 130', 132, 132') assigned to the gearwheel (114, 114').

7. The wind power installation (100) as claimed in any one of the preceding claims, wherein the support structure (10, 10') is made of glass-fiber-reinforced plastic and/or carbon-fiber-reinforced plastic, and the receivers (12, 12') and/or openings (118, 118') are preferably reinforced with metal.

8. The wind power installation (100) as claimed in any one of the preceding claims, wherein the support structure (10, 10') is made of a metallic material, wherein the receivers (12, 12') and/or openings (118, 118') are preferably made of a hardened metallic material.

9. The wind power installation (100) as claimed in any one of the preceding claims, wherein the support structure (10, 10') has a thickness of 100 mm or less, in particular of from 10 mm to 100 mm.

10. The wind power installation (100) as claimed in any one of the preceding claims, wherein the first segment part (10, 10') is made of a high-strength material.

11. The wind power installation (100) as claimed in any one of the preceding claims, wherein the first structural element (134) is a main carrier (112), arranged in a nacelle (104), of a wind power installation (100), the second structural element (136) is a tower (102) of a wind power installation (100), the bearing assembly (138) is a yaw bearing assembly, and the drive (122) is a yaw drive.

12. The wind power installation (100) as claimed in any one of the preceding claims, wherein the first structural element (134') is a rotor blade (108), the second structural element (136') is a rotor hub (110) arranged on the nacelle (104), the bearing assembly (138') is a pitch bearing assembly, and the drive (122') is a pitch drive.

## Revendications

1. Éolienne (100) avec
- un premier composant (134, 134'),
- un deuxième composant (136, 136'),
- un palier (138, 138') au moyen duquel le premier composant (134, 134') est logé de manière rotative sur le deuxième composant (136, 136'),
- un premier raccord à bride (130, 130') entre le premier composant (134, 134') et le palier (138, 138'),
- un deuxième raccord à bride (132, 132') entre le deuxième composant (136, 136') et le palier (138, 138'), et
- des entraînements (122, 122'), lesquels sont commandés par une structure porteuse (10, 10'), pour tourner le premier composant (134, 134') par rapport au deuxième composant (136, 136'), dans laquelle la structure porteuse (10, 10') est réalisée en tant que plaque et disposée sur l'un des raccords à bride (130, 130', 132, 132'),
dans laquelle la structure porteuse (10, 10') est réalisée à partir de plusieurs parties de segment (10, 10'), lesquelles s'étendent sur une partie de la périphérie de manière coaxiale, et, pour la séparation des fonctions, présente au moins une première partie de segment (10, 10') et en outre au moins une deuxième partie de segment (10, 10'), dans laquelle les entraînements (122, 122') sont répartis sur l'au moins une première partie de segment (10, 10'), laquelle présente respectivement au moins un logement (12, 12') pour les entraînements (122, 122').

2. Eolienne (100) selon la revendication 1,
dans laquelle une roue dentée (114, 114') est associée à l'un des composants, et dans laquelle l'entraînement (122, 122') présente au moins un pignon d'entraînement, lequel est en liaison fonctionnelle avec la roue dentée (114, 114').

3. Eolienne (100) selon l'une quelconque des revendications 1 ou 2,
dans laquelle la structure porteuse (10, 10') présente une pluralité d'évidements (14, 14') selon un motif prédéterminé, et le palier (138, 138') du raccord à bride (130, 130', 132, 132') correspondant à la structure porteuse (10, 10') présente en outre des évidements (118, 118') correspondants dans le même motif, dans laquelle les évidements (14, 14') sont adaptés pour le passage de moyens de liaison, en particulier de boulons, au moyen desquels la structure porteuse (10, 10') peut être reliée au raccord à bride (130, 130', 132, 132').

4. Eolienne (100) selon l'une quelconque des revendications précédentes,
dans laquelle le palier (138, 138') présente une bague de palier (138, 138'), et la pluralité d'évidements (14, 14') du palier (138, 138') sont réalisés sur la bague de palier (138, 138').

5. Eolienne (100) selon l'une quelconque des revendications précédentes,
dans laquelle la structure porteuse (10, 10') présente un premier nombre de logements de montage (12, 12') et un deuxième nombre d'entraînements (122, 122') est monté dans les logements, dans laquelle le premier nombre est supérieur au deuxième nombre.

6. Éolienne (100) selon la revendication 2,
dans laquelle la structure porteuse (10, 10') est disposée de manière adjacente à la roue dentée (114, 114'), de préférence entre la roue dentée (114, 114') et le raccord à bride (130, 130', 132, 132') associé à la roue dentée (114, 114').

7. Eolienne (100) selon l'une quelconque des revendications précédentes,
dans laquelle la structure porteuse (10, 10') est réalisée en plastique renforcé de fibres de verre et/ou en plastique renforcé de fibres de carbone, et les logements (12, 12') et/ou évidements (118, 118') sont de préférence réalisés de manière renforcée métalliquement.

8. Eolienne (100) selon l'une quelconque des revendications précédentes,
dans laquelle la structure porteuse (10, 10') est réalisée à partir d'un matériau métallique, dans laquelle les logements (12, 12') et/ou évidements (118, 118') sont de préférence réalisés à partir d'un matériau métallique trempé.

9. Eolienne (100) selon l'une quelconque des revendications précédentes,
dans laquelle la structure porteuse (10, 10') présente une épaisseur de 100 mm ou moins, en particulier de 10 mm à 100 mm.

10. Eolienne (100) selon l'une quelconque des revendications précédentes,
dans laquelle la première partie de segment (10, 10') est réalisée à partir d'un matériau à haute résistance.

11. Eolienne (100) selon l'une quelconque des revendications précédentes,
dans laquelle le premier composant (134) est un support de machine (112) d'une éolienne (100) disposé dans une nacelle (104), le deuxième composant (136) une tour (102) d'une éolienne (100), le palier (138) un palier azimutal et l'entraînement (122) un entraînement azimutal.

12. Eolienne (100) selon l'une quelconque des revendications précédentes,
dans laquelle le premier composant (134') est une pale de rotor (108), le deuxième composant (136') un moyeu de rotor (110) disposé sur la nacelle (104), le palier (138') un palier de pas variable et l'entraînement (122') un entraînement de pas variable.
